# EUROPEAN PATENT APPLICATION

(11) **EP 4 382 225 A1**
(43) Date of publication of application: **12.06.2024**
(21) Application number: 23214128.3
(22) Date of filing: 04.12.2023
(51) Int. Cl.: B21J 15/32

(54) **FASTENER DELIVERY SYSTEM**

(30) Priority: 05.12.2022 US 202263430308 P
(71) Applicant: Airbus Operations GmbH, 21129 Hamburg (DE)
(72) Inventor: FADLOVICH, Chace, 21129 Hamburg (DE)
(74) Representative: Isarpatent

(57) **Abstract**

A fastener delivery system (12) with a fastener storage cassette (14), a cassette holding module (16), a selection chamber assembly, a delivery conduit, and an inspection sensor. The fastener storage cassette (14) includes a plurality of individual fastener chambers each configured to loosely receive a fastener to be selected and delivered, each fastener chamber communicating with a separate air blast port, and, wherein the cassette holding module (16) is configured to hold at least one fastener storage cassette (14). A movable selection chamber assembly is aligned with a desired cavity in the fastener storage cassette (14) and an air blast moves the fastener to the selection chamber assembly where it can be moved to a receiver and passed to an end effector. The inspection sensor may determine if the fastener is the desired or appropriate fastener.

## Description

### FIELD OF THE INVENTION

The present invention relates to fastening systems, and more particularly to an automated fastener delivery system.

### BACKGROUND OF THE INVENTION

Automated fastener delivery systems are known for use with robotic assembly systems in which individual fasteners are delivered or made available to an end effector of an assembly robot. Drawbacks or limitations of existing delivery systems, consisting of a fastener carrier positioned at the side of the robotic assembly system, in comparison with the robotics fastener delivery system embodying the principles of the present invention, are shown in the following chart:

| | Conventional | System of the invention |
|---|---|---|
| Size (dimensions) | Large | Small |
| Works in any orientation (Gravity) | No | Yes |
| Portable | No | Yes |
| Can be located by the end effector | No | Yes |
| Limited fastener types per system | Yes | No |
| Easy cable management | No | Yes |

### SUMMARY OF THE INVENTION

The present invention seeks to overcome one or more of the limitations of the prior systems.

Features of the fastener delivery system for a robotic assembly system include one or more of the following: a fastener storage cassette, a cassette holding module, a selection chamber assembly, a delivery conduit, and an inspection sensor.

The fastener storage cassette may include a plurality of individual fastener chambers configured to loosely receive fasteners to be selected and delivered, with each fastener chamber communicating with a separate air blast port.

The cassette holding module may be configured to hold a plurality of fastener storage cassettes.

The cassette holding module and the selection chamber assembly may be movable relative to one another so as to allow the selection chamber assembly to be aligned with a particular fastener chamber of a particular fastener storage cassette.

The selection chamber assembly may include a receiving space configured to receive a selected fastener and an air blast nozzle configured to be aligned with the air blast port associated with an individual fastener chamber holding a selected fastener.

The selection chamber assembly may include a retaining arrangement configured to capture and retain a selected fastener within the receiving space of the selection chamber assembly.

The selection chamber assembly may include an air delivery system configured to eject the selected fastener out of the receiving space and into the delivery conduit.

The inspection sensor may be located in the delivery conduit and may be configured to inspect one or more of a diameter, a length, and a shape of the selected fastener in the delivery conduit, and to provide inspection data to a controller so that a comparison of the sensed diameter, length and/or shape to a predetermined diameter, length and/or shape of the desired fastener cane be made. If the comparison of the sensed and predetermined diameter, length and/or shape shows a difference greater than a set tolerance, then a rejection of the selected fastener is made. If no difference is detected, the fastener is delivered to an end effector of the robotic assembly system.

The selection chamber assembly may be carried on the vertical selector, with the vertical selector being movable in a vertical direction to move the selection chamber vertically relative to the fastener storage cassettes.

The selection chamber assembly may be radially movable to cause opposed retaining fingers on the cassette holding module to be moved away from one another to expose the open distal end of the appropriate fastener chamber to allow a fastener in the fastener chamber to be moved into the receiving space of the selection chamber assembly.

The delivery conduit may be positioned below the fastener storage cassettes, and the selection chamber assembly may be vertically movable such that after the selected fastener is received in the receiving space of the selection chamber assembly, the selection chamber assembly may be moved vertically to align with the delivery conduit.

Accordingly, the present invention may be broadly characterized as providing, a fastener delivery system having a fastener storage cassette, a cassette holding module, and a selection chamber assembly. The fastener storage cassette includes a plurality of individual fastener chambers each configured to loosely receive a fastener to be selected and delivered, each fastener chamber communicating with a separate air blast port. The cassette holding module is configured to hold at least one fastener storage cassette.

The cassette holding module and the selection chamber assembly may be configured to be movable relative to one another to allow the selection chamber assembly to be aligned with a particular fastener chamber of the fastener storage cassette.

The selection chamber assembly may include a receiving space configured to receive a selected fastener and an air blast nozzle configured to be aligned with the air blast port associated with an individual fastener chamber holding a selected fastener.

The selection chamber assembly may include a retaining arrangement configured to capture and retain a selected fastener within the receiving space of the selection chamber assembly.

The fastener delivery system may further include a delivery conduit.

The selection chamber assembly may include an air delivery system configured to selectively push the selected fastener out of the receiving space and into the delivery conduit.

The fastener delivery system may further include an inspection sensor configured to inspect one or more of a diameter, a length, and a shape of the selected fastener.

The inspection sensor may be located in the delivery conduit and is configured to provide inspection data to a controller configured to compare of the sensed diameter, length and/or shape to a predetermined diameter, length and/or shape of the desired fastener.

When a comparison of the sensed and predetermined diameter, length and/or shape shows a difference greater than a set tolerance, then a rejection of the selected fastener may be made by the controller, but when no difference is detected, the air delivery system may deliver the fastener to an end effector of the robotic assembly system.

The present invention may also be generally characterized as providing a fastener storage cassette for a fastener delivery system comprising: a plurality of individual fastener chambers, each configured to loosely receive a fastener to be selected and delivered, and a separate air blast port communicating with each associated fastener chamber, wherein, a blast of air through one of the air blast ports will flow into the associated fastener chamber in a manner which will cause the fastener loosely received in such fastener chamber to be pushed out of the fastener chamber.

### BRIEF DESCRIPTION OF THE DRAWINGS

Embodiments of the invention are described in more detail with reference to the accompanying schematic drawings that are listed below in which:
FIG. 1 is a schematic view of a robotic assembly system with a delivery system according to one or more aspects of the present invention;
FIG. 2 is a see-through view of a fastener storage cassette according to one or more aspects of the present invention;
FIG. 3 is a schematic view of a cassette holding module according to one or more aspects of the present invention;
FIG. 4 is another schematic view of the cassette holding module show in FIG. 3;
FIG. 5 is a side schematic view of the cassette holding module show in FIG. 3;
FIG. 6 is a closeup schematic view of a selection chamber assembly according to one or more aspects of the present invention;
FIG. 7 is a closeup schematic view of the selection chamber assembly of FIG. 6 proximate the fastener storage cassette of FIG. 2;
FIG. 8 is a closeup schematic view of a portion of the fastener storage cassette of FIG. 2;
FIG. 9 is a side perspective view of a selection chamber assembly according to one or more aspects of the present invention;
FIG. 10 is a schematic view of a removal of a fastener from fastener storage cassette according to one or more aspects of the present invention; and,
FIG. 11 is a schematic side of a device according to one or more aspects of the present invention configured for delivery of a removed fastener to an end effector.

### SUMMARY OF THE INVENTION

The present invention is useful in a robotic assembly system to deliver fasteners from a storage cassette to an end effector of an assembly robot, with allowing for a wide range of fasteners to be stored and delivered as required during the assembly process.

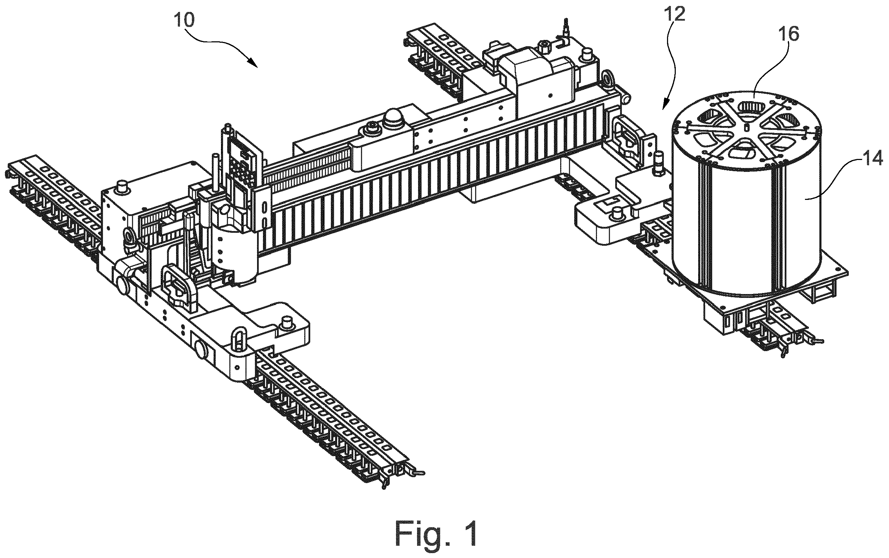

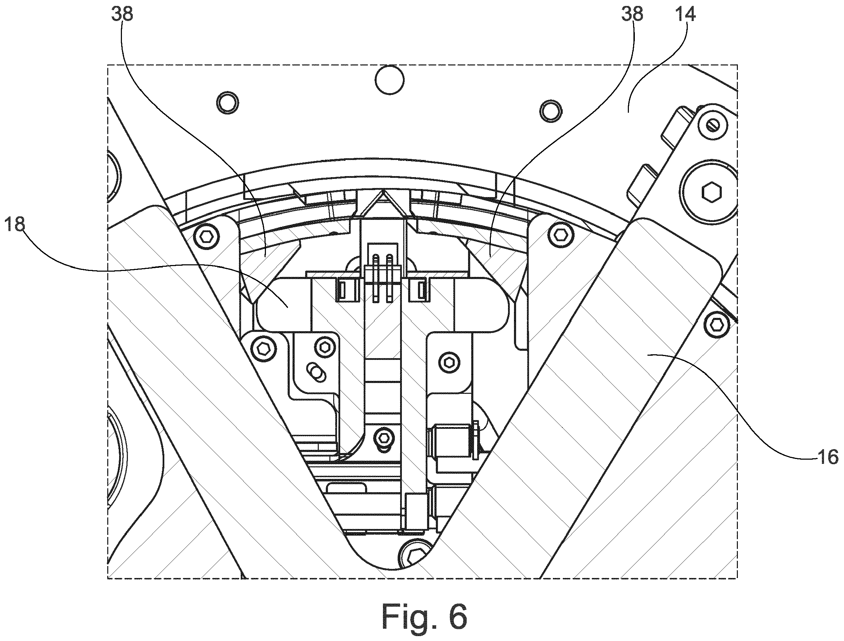

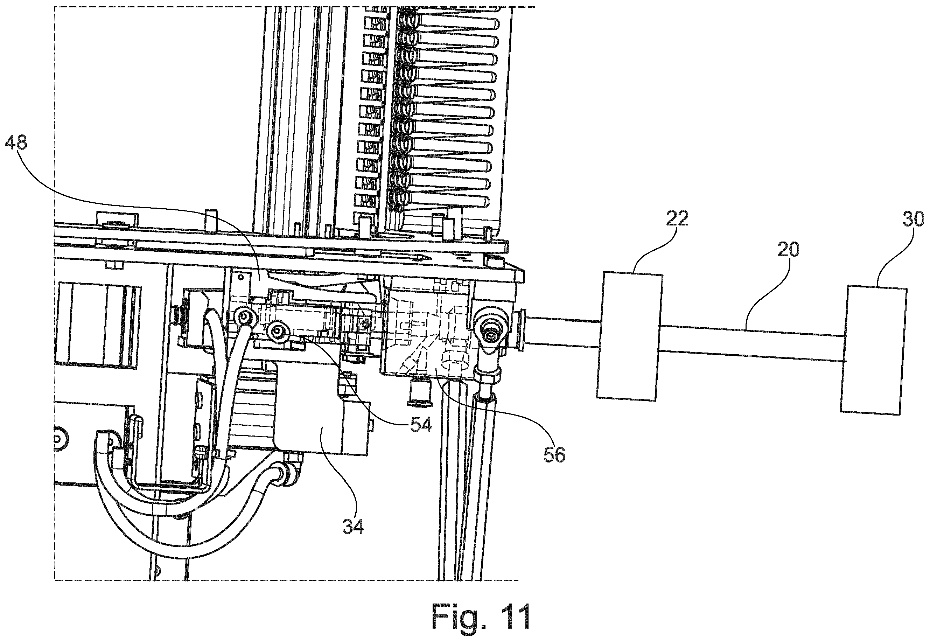

Turning to FIG.1, a robotic assembly system 10 having a fastener delivery system 12 is shown. As will be described in more detail below, the fastener delivery system 12 includes one or more of the following: a fastener storage cassette 14; a cassette holding module 16; a selection chamber assembly 18 (see FIG. 6); a delivery conduit 20 (see FIG. 11); and an inspection sensor 22 (see FIG. 11).

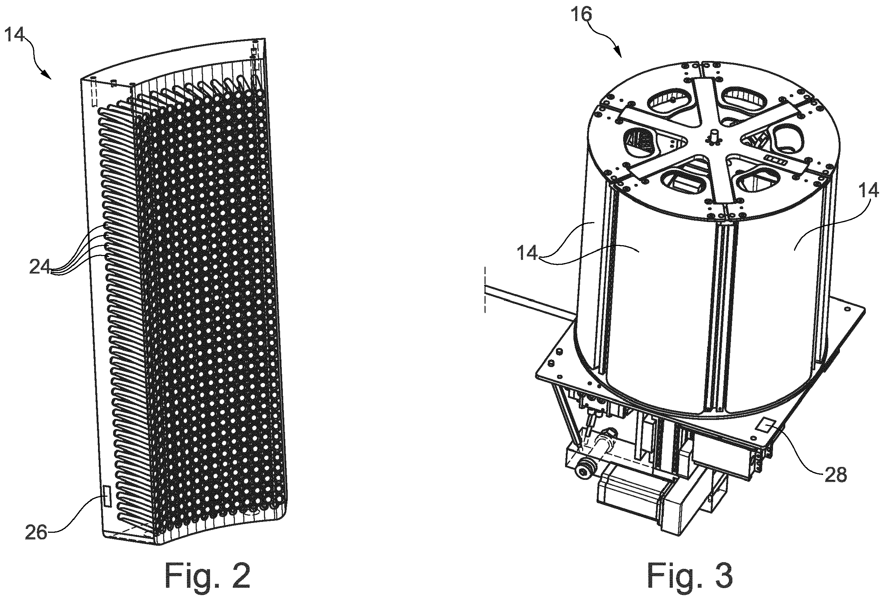

As shown in FIG. 2, the fastener storage cassette 14 has a plurality of cavities or chambers 24 for holding a fastener. Each fastener storage cassette 14 may hold around 500 fasteners. The 500 fasteners may be the same type of fastener or 500 different types of fasteners, or some desired combination of numbers of different fasteners. In this manner, the fastener delivery system 12 of the present invention is not limited in the types of fasteners that can be accommodated in the fastener storage cassette 14 and handled by the fastener delivery system 12.

The fastener storage cassette 14 may be provided with a data storage device 26, such as an RFID chip, or other electronic, magnetic, or printed data storage devices, including bar codes and QR codes, and similar storage devices, such that identification of the types of fasteners held in the fastener storage cassette 14 can be held in the date storage devices 26. A data reader 28 (FIG. 3) can be provided which is configured to read the data contained on the data storage device and to provide such data to a controller of the fastener delivery system. The data reader may be located on the cassette holding module 16.

In the depicted embodiment shown in FIG. 3, six such fastener storage cassette 14 can be carried on the cassette holding module 16 of the fastener delivery system 12 to provide a compact fastener delivery system in comparison with recently available systems. With such a compact fastener delivery system 12, the cassette holding module 16 may be easily transportable, and may also be located close to an end effector 30 (see FIG. 11) of the robotic assembly system 10. The cassette holding module 16 may have the plurality of fastener storage cassettes 14 carried on a cylindrical outer surface thereof, with the proximal end of the fastener chambers 24 arranged radially inward and the distal end of the fastener chambers 24 arranged radially outward.

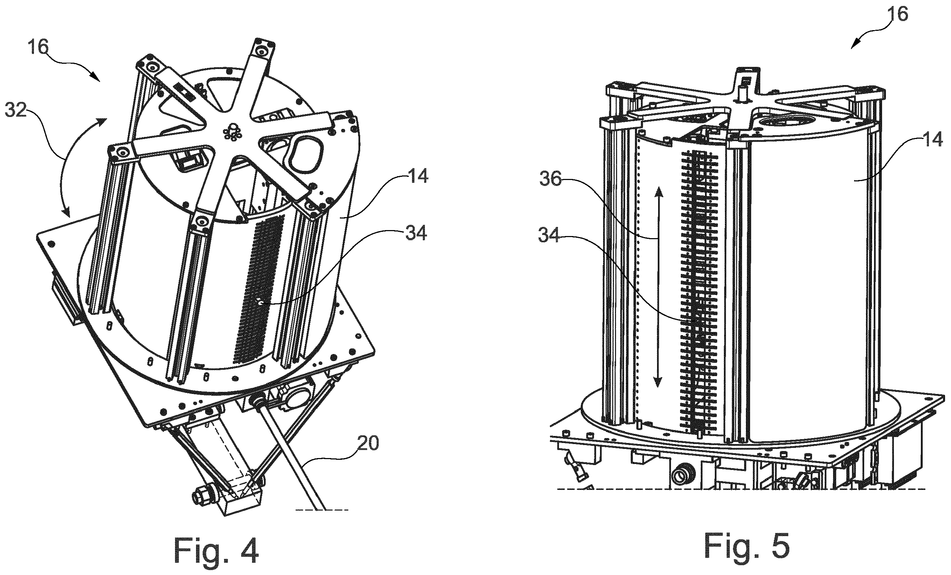

Turning to FIGS. 4 and 5, the fastener storage cassette 14 rotate (as shown by arrow 32) into position via an appropriate electronic controller and motor (not shown) to present the desired fastener storage cassette 14 in a desired delivery position. A vertical selector 34 is moved along arrow 36 to a location corresponding to the desired or appropriate fastener chamber 24 (containing the desired or appropriate fastener) to deliver the appropriate fastener to the end effector 30. In the fastener chambers 24, the fastener can be held loosely and preferably are stored with the head end of the fastener proximate the proximal end of the fastener chamber 24.

A pair of retaining fingers 38 are moved out of the way by the selection chamber assembly 18, which is movably positioned on the inside of the cassette holding module 16. The pair of retaining fingers 38 are passively moved out of the way when selection chamber assembly 18 moves forward (radially outward) towards the fastener storage cassette 14.

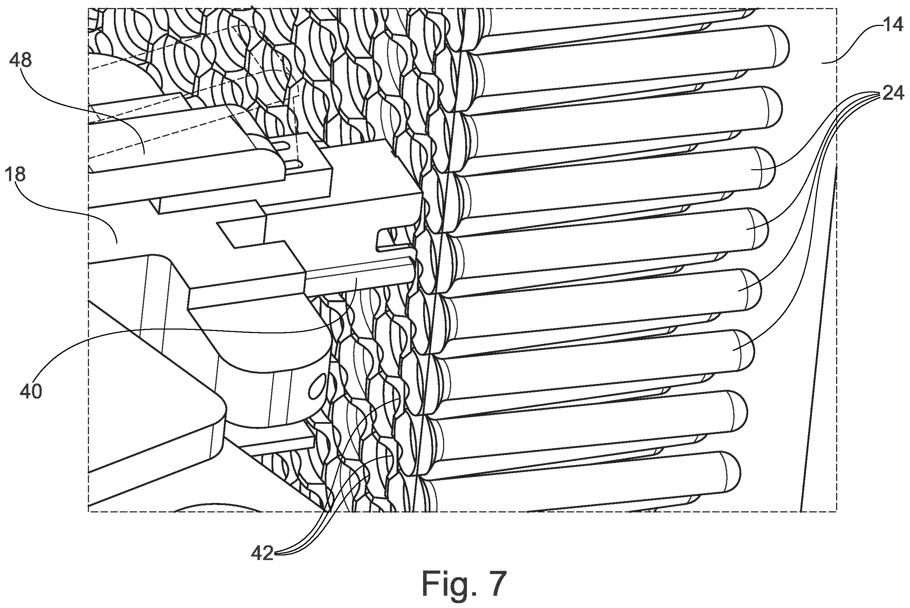

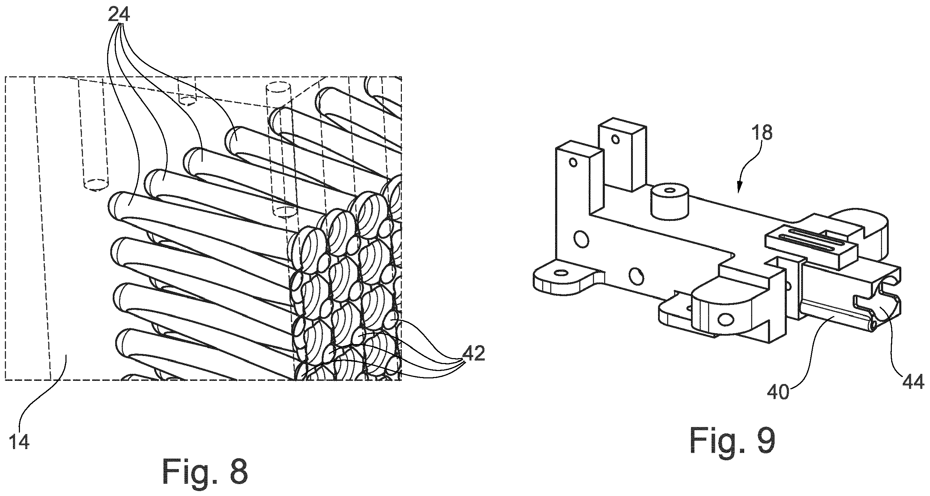

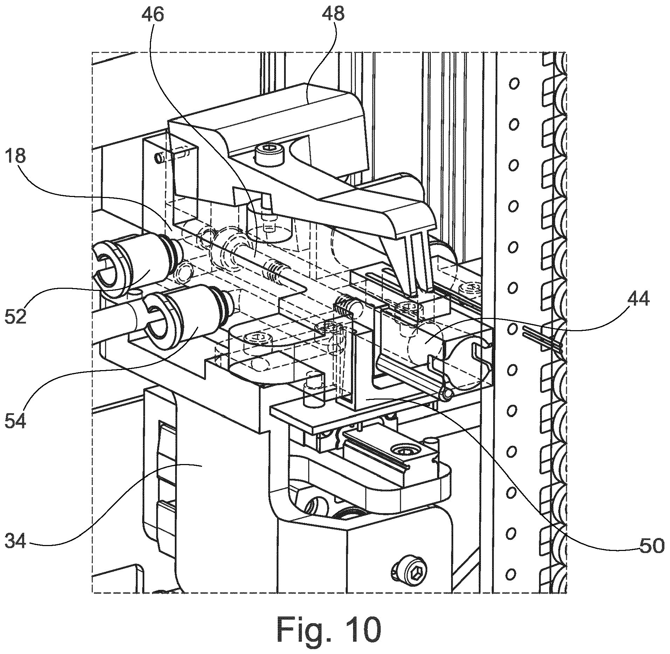

With reference to FIGS. 7 to 10, movement of a fastener 46 from the fastener storage cassette 14 will be described. When the selection chamber assembly 18 is aligned with the correct fastener/cavity 24, an air blast from a nozzle 40 (see FIGS 7 and 9) carried on the selection chamber assembly 18 is sent through an air blast port 42 (see FIGS. 7 and 8) in the fastener storage cassette 14 associated with a particular fastener chamber carrying the desired fastener 46. The air blast moves the fastener 46 from the fastener storage cassette 14 to a receiving space 44 in the selection chamber assembly 18.

Thus, a separate air blast port 42 is provided which connects with each separate fastener chamber 24. The air blast nozzle 40 is carried on the selection chamber assembly 18 adjacent to the receiving space 44 in the selection chamber assembly 18. The air blast from the air blast nozzle 40 into the air blast port 42 flows into a distal end of the fastener chamber 24 and pushes the loose fastener 46 out of the fastener storage cassette 14 at an open proximal end of the fastener chamber 24 and into the aligned receiving space 44 in the selection chamber assembly 18.

When the fastener 46 moves from the fastener storage cassette 14 into the selection chamber assembly 18, a blocking finger assembly 48 is in an open position (e.g., raised), allowing the fastener 46 to enter the receiving space 44. When the fastener 46 passes the blocking finger assembly 48, the blocking finger assembly 48 move to a closed position (e.g., lowered) and capture the fastener 46 in the receiving space 44. A sensor 50 may be used to determine when the fastener 46 moves past the blocking finger assembly 48.

An air connection 52 may provide compressed air to actuate the blocking finger assembly 48 and change its position (e.g., up or down). A second air connection 54 may be provided to provide air to move the fastener 46 at the appropriate time.

Turning to FIG. 11, with the fastener 46 in the receiving space 44, the selection chamber assembly 18 is lowered to a receiver 56. Once the selection chamber assembly 18 is aligned with the receiver 56, the blocking finger assembly 48 may be moved to the open position and an air blast is used to eject the fastener 46 from the selection chamber assembly 18.

The fastener 46 will be inspected for diameter, length, and shape in the inspection sensor 22 before being delivered to the end effector 30 in the delivery conduit 20. If the fastener 46 is determined to be incorrect, the fastener 46 may be discarded instead of being delivered to the end effector 30.

Appropriate motors and actuators may be operated and controlled by an electronic controller, and all of these items may be arranged within the cassette holding module in a compact form, with a minimum amount of cabling required between the components, and a single power line and a single data line leading out of the cassette holding module, thereby allowing for easy cable management in comparison to presently available systems.

By effecting movement of the selected fasteners with air blasts, the fastener delivery system can be placed in any orientation (vertical or horizontal) since gravity is not utilized for moving or holding the fasteners during the selection or delivery process. Any mention of orientation or position, such as "above" or "below", or "horizontal" or "vertical" is provided only to describe the system in the orientation shown in the drawings. It should be understood that the system could be rotated about any horizontal or vertical axis from the orientation shown in the drawings, and it will still work in the same manner as shown and described.

The systems and devices described herein may include a controller or a computing device comprising a processing unit and a memory which has stored therein computer-executable instructions for implementing the processes described herein. The processing unit may comprise any suitable devices configured to cause a series of steps to be performed so as to implement the method such that instructions, when executed by the computing device or other programmable apparatus, may cause the functions/acts/steps specified in the methods described herein to be executed. The processing unit may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory may be any suitable known or other machine-readable storage medium. The memory may comprise non-transitory computer readable storage medium such as, for example, but not limited to, an electronic, magnetic, optical, electromagnetic, infrared, or semiconductor system, apparatus, or device, or any suitable combination of the foregoing. The memory may include a suitable combination of any type of computer memory that is located either internally or externally to the device such as, for example, random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. The memory may comprise any storage means (e.g., devices) suitable for retrievably storing the computer-executable instructions executable by processing unit.

The methods and systems described herein may be implemented in a high-level procedural or object-oriented programming or scripting language, or a combination thereof, to communicate with or assist in the operation of the controller or computing device. Alternatively, the methods and systems described herein may be implemented in assembly or machine language. The language may be a compiled or interpreted language. Program code for implementing the methods and systems for detecting skew in a wing slat of an aircraft described herein may be stored on the storage media or the device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein.

Computer-executable instructions may be in many forms, including program modules, executed by one or more computers or other devices. Generally, program modules include routines, programs, objects, components, data structures, etc., that perform particular tasks or implement particular abstract data types. Typically, the functionality of the program modules may be combined or distributed as desired in various embodiments.

While at least one exemplary embodiment of the present invention(s) is disclosed herein, it should be understood that modifications, substitutions and alternatives may be apparent to one of ordinary skill in the art and can be made without departing from the scope of this disclosure. This disclosure is intended to cover any adaptations or variations of the exemplary embodiment(s). In addition, in this disclosure, the terms "comprise" or "comprising" do not exclude other elements or steps, the terms "a" or "one" do not exclude a plural number, and the term "or" means either or both. Furthermore, characteristics or steps which have been described may also be used in combination with other characteristics or steps and in any order unless the disclosure or context suggests otherwise.

## Claims

1. Fastener delivery system (12), comprising:
a fastener storage cassette (14),
a cassette holding module (16), and,
a selection chamber assembly (18),
wherein the fastener storage cassette (14) includes a plurality of individual fastener chambers (24) each configured to loosely receive a fastener (46) to be selected and delivered, each fastener chamber (24) communicating with a separate air blast port (42), and,
wherein the cassette holding module (16) is configured to hold a at least one fastener storage cassette (14).

2. Fastener delivery system (12) according to claim 1, wherein the cassette holding module (16) and the selection chamber assembly (18) are movable relative to one another to allow the selection chamber assembly (18) to be aligned with a particular fastener chamber (24) of the fastener storage cassette (14).

3. Fastener delivery system (12) according to any one of claims 1 or 2, wherein the selection chamber assembly (18) comprises a receiving space (44) configured to receive a selected fastener (46) and an air blast nozzle (40) configured to be aligned with the air blast port (42) associated with an individual fastener chamber (24) holding the selected fastener (46).

4. Fastener delivery system (12) according to any one of the preceding claims, wherein the selection chamber assembly (18) comprises a retaining arrangement configured to capture and retain a selected fastener (46) within a receiving space (44) of the selection chamber assembly (18).

5. Fastener delivery system (12) according to any one of the preceding claims, further comprising a delivery conduit (20).

6. Fastener delivery system (12) according to claim 5, wherein the selection chamber assembly (18) comprises an air delivery system configured to selectively push a selected fastener (46) out of a receiving space (44) and into the delivery conduit (20).

7. Fastener delivery system (12) according to claim 6, further comprising:
an inspection sensor (22) configured to inspect one or more of a diameter, a length, and a shape of the selected fastener (46).

8. Fastener delivery system (12) according to claim 7, wherein the inspection sensor (22) is located in the delivery conduit (20) and is configured to provide inspection data to a controller configured to compare a sensed diameter, length, shape or a combination thereof to a predetermined diameter, length, shape, or a combination thereof of the selected fastener (46).

9. Fastener delivery system (12) according to claim 8, wherein when a comparison of the sensed and predetermined diameter, length and/or shape shows a difference greater than a set tolerance, then a rejection of the selected fastener (46) is made by the controller, but when no difference is detected, the air delivery system delivers the fastener (46) to an end effector of a robotic assembly system.

10. Fastener storage cassette (14) for a fastener delivery system (12), comprising:
a plurality of individual fastener chambers (24), each configured to loosely receive a fastener (46) to be selected and delivered, and
a separate air blast port (42) communicating with each associated fastener chamber (24),
wherein, a blast of air through one of the air blast ports (42) will flow into the associated fastener chamber (24) in a manner which will cause the fastener (46) loosely received in such fastener chamber (24) to be pushed out of the fastener chamber (24).
